# EUROPÄISCHE PATENTSCHRIFT

(11) **EP 1 155 490 B1**
(45) Veröffentlichungstag und Bekanntmachung des Hinweises auf die Patenterteilung: **24.10.2007**
(21) Anmeldenummer: 00988617.7
(22) Anmeldetag: 15.11.2000
(51) Int. Cl.: H02K 1/24

(54) **KLAUENPOL-GENERATOR MIT SCHWINGUNGSDÄMPFUNG**
POLE GENERATOR WITH VIBRATION DAMPING
GENERATEUR A POLES A GRIFFES AVEC AMORTISSEMENT DES OSCILLATIONS

(30) Priorität: 04.12.1999 DE 19958503
(43) Veröffentlichungstag der Anmeldung: 21.11.2001
(73) Patentinhaber: ROBERT BOSCH GMBH, 70442 Stuttgart (DE)
(72) Erfinder: BRAUN, Horst, 70469 Stuttgart (DE); LUTZ, Hans-Joachim, 68623 Lampertheim (DE); WILLMS, Dieter, 74074 Heilbronn (DE); DEBARD, Jérome, 2849B Cardiff CF5 1EP (GB); PERRIN-BONNET, Anne, CF51EP Llontuit Fardre CF38 2NZ (GB)
(86) Internationale Anmeldenummer: PCT/DE2000/004028
(87) Internationale Veröffentlichungsnummer: WO 2001/041284

(56) Entgegenhaltungen:
- GB-A- 1 104 435
- US-A- 3 230 404
- US-A- 4 617 485
- US-A- 5 519 277
- US-A- 5 536 987

## Beschreibung

### Stand der Technik

Die Erfindung betrifft eine elektrische Maschine, insbesondere einen Klauenpolgenerator für Kraftfahrzeuge, gemäß der Gattung des unabhängigen Anspruchs.

Elektrische Maschinen für Kraftfahrzeuge sind beispielsweise bekannt aus der Europäischen Patentschrift EP 0 720 275. Die bekannte elektrische Maschine umfaßt einen Rotor in Klauenpolbauweise, der unter anderem aus einer Achse, zwei Polrädern, einer Erregerspule und einem Polverschluß besteht. Der Polverschluß ist so ausgebildet, daß dieser die Zwischenräume der gegenpoligen Klauenpole derart schließt, daß an den in etwa axial ausgerichteten radial außenliegenden Kanten der Pole keine Strömung abreißt und dadurch damit verbundene Geräuschentwicklung verhindert. Der Klauenverschluß ist weiterhin derart ausgebildet, daß ein wesentlicher Teil seiner zentrifugal wirkenden Eigenlast über die Innenseite der Klauenpolspitzen an diese übertragen wird.

Diese bekannte elektrische Maschine weist unter anderem den Nachteil auf, daß durch die Aufnahme der zentrifugalen Last des Klauenverschlusses über die Klauenpole diese über ihre Eigenlast hinaus zusätzlich belastet werden.

### Vorteile der Erfindung

Mit der erfindungsgemäßen elektrischen Maschine mit den Merkmalen des unabhängigen Anspruchs ist es möglich, die zentrifugale Eigenlast des Klauenverschlusses so auf die Polräder zu übertragen, daß die Pole beziehungsweise Gegenpole nicht belastet werden. Hierzu ist vorgesehen, daß sich der Polverschluß mit zumindest einem seiner axialen Endbereiche unter Überständen an den Polwurzeln abstützt.

Durch die in den Unteransprüchen aufgeführten Maßnahmen ergeben sich vorteilhafte Weiterbildungen und Verbesserungen der im unabhängigen Anspruch angegebenen Merkmale.

Der Polverschluß weist im Bereich der axialen Endbereiche Ausnehmungen auf, in die die Überstände der Polwurzeln eingepaßt sind. Dies hat den Vorteil, daß sich so eine im wesentlichen zylindrische Oberfläche des Rotors ergibt.

Dadurch, daß die Polräder durch einen Umformprozeß hergestellt sind, ist es von Vorteil, wenn die Überstände ebenfalls durch Umformen gefertigt sind.

Nach einer weiteren Ausgestaltung der Erfindung bleibt zwischen zumindest einem Endbereich des Polverschlusses und zumindest einer Kehle zwischen zwei Polwurzeln eine Öffnung zu einem Raum radial innerhalb der Pole und Gegenpole ausgespart. Diese Aussparung ermöglicht ein besseres Einfließen eines Imprägnierharzes zum Fixieren der Erregerspule.

Damit am Übergang von den nach außen gerichteten Oberflächen der Pole und Gegenpole zum Polverschluß die Luftströmung nicht ablöst, muß der Übergang zwischen den Oberflächen und Gegenpole des Polverschlusses und den Polen und Gegenpolen stufenlos erfolgen.

Um eine bessere Eigensteifigkeit des Polverschlusses zu erhalten, sind die Verschlußbereiche des Polverschlusses durch einen Ring miteinander verbunden. Eine weitere Verbesserung des Polverschlusses ergibt sich dadurch, daß ein Bereich zwischen dem Ring und einem Endbereich des Polverschlusses durch ein Flächenelement geschlossen ist.

Damit der Polverschluß zwischen zwei Überständen an den Polwurzeln nicht zu stark auf Biegung belastet wird, soll sich das Flächenelement nach einer weiteren Ausbildung an einer radial nach innen gerichteten Unterseite eines Pols oder Gegenpols abstützen.

### Zeichnungen

Die Erfindung wird nachstehend in einem Ausführungsbeispiel anhand der zugehörigen Zeichnungen näher erläutert. Es zeigen:
Figur 1 eine perspektivische Darstellung eines Rotors einer erfindungsgemäßen elektrischen Maschine,
Figur 2 eine axiale Ansicht auf ein Polrad,
Figur 3 eine Seitenansicht eines erfindungsgemäßen Klauenverschlusses und
Figur 4 eine Stirnansicht auf den Rotor mit Polverschluß.

### Beschreibung der Ausführungsbeispiele

Identische beziehungsweise gleichwirkende Bauteile sind mit gleichen Bezugszahlen bezeichnet.

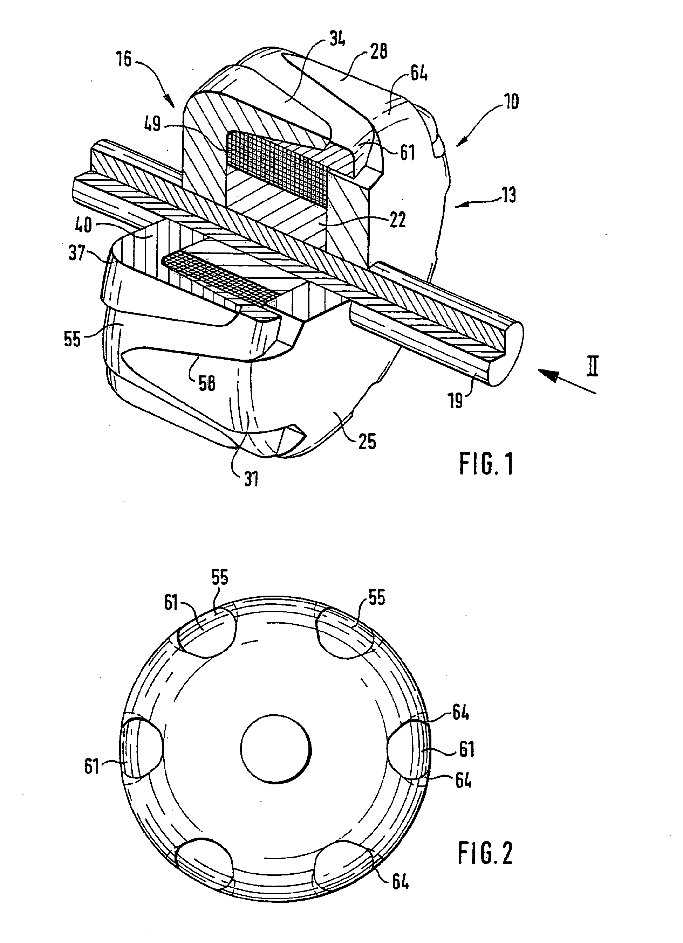

Figur 1 zeigt das Ausführungsbeispiel eines Rotors 10 der erfindungsgemäßen elektrischen Maschine. Der Rotor 10 ist dargestellt als Rotor in Klauenpolbauweise. Der Rotor hat ein Polrad 13 und ein Gegenpolrad 16, die beide auf einer Rotorwelle 19 befestigt sind. Das Polrad 13 und das Gegenpolrad 16 sind durch einen Rotorkern 22 beabstandet. Das Polrad 13 besteht aus einer Polradscheibe 25, von der Pole 28 ausgehen. Die Pole 28 erstrecken sich im wesentlichen in Achsrichtung der Rotorwelle 19. Die Pole 28 sind über Polwurzeln 31 mit dem Polrad 13 beziehungsweise der Polradscheibe 25 einstückig verbunden.

Der Aufbau des Gegenpolrads 16 gleicht dem Aufbau des Polrads 13. Gegenpole 34 sind über Gegenpolwurzeln 37 mit der Gegenpolradscheibe 40 einstückig verbunden. Dabei sind die Polwurzeln 31 beziehungsweise die Gegenpolwurzeln 37 die nicht frei tragenden Bereiche zwischen den Polen 28 beziehungsweise Gegenpolen 34 und der Polradscheibe 25 beziehungsweise Gegenpolradscheibe 37. Die Gegenpole 34 erstrecken sich wie die Pole 28 in Achsrichtung der Rotorwelle 19.

Die einzelnen Pole 28 sind am Umfang des Rotors 10 gleichmäßig beabstandet und weisen zwischen den einzelnen Polen 28 Pollücken auf. Die Gegenpole 34 des Gegenpolrads 16 sind ebenfalls am Umfang gleichmäßig beabstandet angeordnet und bilden Gegenpollücken. In Einbaulage sind das Polrad 13 und das Gegenpolrad 16 so angeordnet, daß die Pole 28 des Polrads 13 in die Gegenpollücken des Gegenpolrads 16 hineinreichen. Umgekehrt reichen die Gegenpole 34 des Gegenpolrads 16 in die Pollücken des Polrads 13. Die Gegenpole 34 und die Pole 28 sind darüber hinaus ebenfalls gleichmäßig beabstandet angeordnet. Die Pole 28 und Gegenpole 34 umgreifen eine Erregerspule 49, die einerseits in axialer Richtung zwischen der Polradscheibe 25 und der Gegenpolradscheibe 40 angeordnet ist und andererseits in radialer Richtung zwischen dem Rotorkern 22 und den Polen 28 und Gegenpolen 34.

Die aerodynamischen Eigenschaften eines solchen Rotors 10 sind ohne Polverschluß schlecht. Der sich drehende Rotor 10 und die zahlreichen Zwischenräumen, die sogenannten Pollücken 52, werden im Betrieb von Kühlluft umströmt. Diese Pollücken ermöglichen es der umstömenden Luft an den in axialer Richtung angeordneten axialen Kanten der Pole 28 und Gegenpole 34 abzureißen. Es bildet sich dadurch eine ungeordnete Strömung, die eine Ursache für die Geräuschimmissionen eines Rotors beziehungsweise eines Generators darstellt.

Indem in die Pollücken 52 ein Pollückenverschluß 55 eingesetzt wird, kann an den in etwa axialer Richtung verlaufenden Kanten 58 der Pole 28 und Gegenpole 34 keine geräuscherzeugende Strömung mehr abreißen. Der Pollückenverschluß 55 stützt sich dabei mit zumindest einem seiner axialen Endbereiche 61 unter Überständen 64 an den Polwurzeln 31 beziehungsweise Gegenpolwurzeln 37 ab, siehe auch Figur 2. Der Pollückenverschluß 55 stützt sich an den Gegenpolwurzeln 37 beziehungsweise Polwurzeln 31 ab. Dies bedeutet, daß die vom Pollückenverschluß 55 ausgehende, nach radial außen wirkende Zentrifugallast nicht über die Gegenpole 34 beziehungsweise Pole 28 auf das Polrad 13 geleitet wird, sondern über die Überstände 64 an den Gegenpolwurzeln 37 und Polwurzeln 31 ohne Momentenwirkung auf das Polrad 13 beziehungsweise 16. Dies bedeutet eine erhebliche Belastungsverringerung für die Pole 28 beziehungsweise 34 und deren Gegenpolwurzeln 37 beziehungsweise Polwurzeln 31, da hierbei die Biegebelastung der Gegenpolwurzeln 37 und Polwurzeln 31 verringert ist.

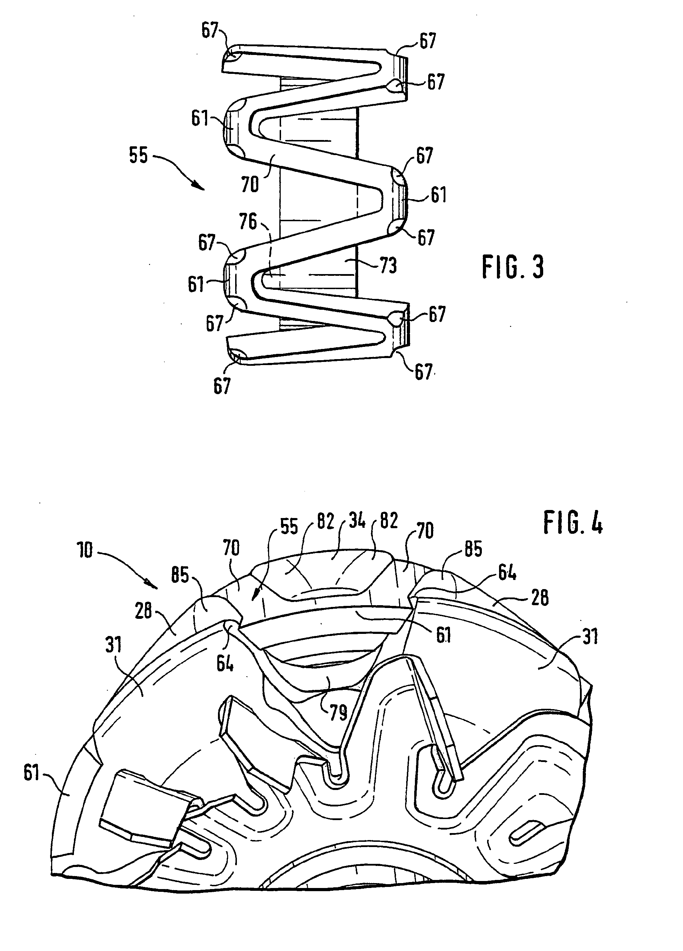

Um eine möglichst wenig zerklüftete Oberfläche des Rotors 10 zu erhalten, weist der Pollückenverschluß 55 im Bereich der Überstände 64 Ausnehmungen 67 auf, in die die Überstände 64 eingepaßt sind. Es ergibt sich so eine im wesentlichen zylindrische Oberfläche des Rotors 10 aus den nach außen gerichteten Oberflächen von Pollückenverschluß 55, Gegenpolen 34 und Polen 28, siehe auch Figur 1 und Figur 3.

Die Überstände 64 werden an das Polrad 13 und Gegenpolrad 16 mittels eines Umformprozesses angeformt. Alternativ ist es auch möglich die Überstände 64 durch spanende Bearbeitung der Polwurzeln 31 und Gegenpolwurzeln 37 herzustellen.

Der in Figur 3 dargestellte Pollückenverschluß 55 weist die bereits erwähnten Endbereiche 61 auf, die mittels stabförmiger Bereiche 70 miteinander verbunden sind. Die stabförmigen Bereiche 70 sind der Außenkontur der Pole 28 beziehungsweise Gegenpole 34 angepaßt. Die Stabilität des Pollückenverschlusses 55 wird erhöht, indem die stabförmigen Bereiche 70 auf ihrer radial nach innen gerichteten Seite durch einen Ring 73 miteinander verbunden sind. Eine nochmalige Steigerung der Stabilität des Pollückenverschlusses 55 wird dadurch erreicht, daß die Endbereiche 61 mit dem Ring 73 durch je ein Flächenelement 76 verbunden sind.

Aus der in Figur 4 dargestellten perspektivischen Ansicht des Rotors 10 ist eine Einbaulage des Pollückenverschlusses 55 zu erkennen. Der Endbereich 61 erstreckt sich zwischen zwei Polwurzeln 31. Der Endbereich 61 hat eine verhältnismäßig kurze radiale Erstreckung, so daß zwischen dem Endbereich 61 des Pollückenverschlusses 55 und zumindest einer Kehle 79 zwischen zwei Polwurzeln 31 eine Öffnung zu einem Raum radial innerhalb der Pole 28 und Gegenpole 34 ausgespart ist. Die Pole 28 und die Gegenpole 34 weisen sogenannte Polabhebungen 82 beziehungsweise 85 auf, wodurch ein Übergang zwischen den radial nach außen gerichteten Oberflächen des Pollückenverschlusses 55 und den Polen 28 beziehungsweise Gegenpolen 34 stufenlos ausgeführt ist.

In einem weiteren Ausführungsbeispiel ist der Pollückenverschluß 55 nicht nur an Überständen 64 an den Gegenpolwurzeln 37 beziehungsweise Polwurzeln 31 abgestützt, sondern darüber hinaus auch an einer nach radial innen gerichteten Unterseite des Pols 28 beziehungsweise des Gegenpols 34.

## Patentansprüche

1. Elektrische Maschine mit einem Rotor (10), insbesondere Klauenpolrotor, mit einem Erregersystem aus elektrisch erregten Einzelpolen im Rotor (10) in Form von elektromagnetisch erregten Polen (28) und Gegenpolen (34), mit einem zwischen den sich am Umfang des Rotors (10) abwechselnden Polen (28) und Gegenpolen (34) eingesetzten Pollückenverschluß (55), der die Freiräume zumindest teilweise ausfüllt, **dadurch gekennzeichnet, daß** der Pollückenverschluß (55) sich mit zumindest einem seiner axialen Endbereiche unter Überständen (64) an Polwurzeln (31, 37) abstützt.

2. Elektrische Maschine nach Anspruch 1, **dadurch gekennzeichnet, daß** der Pollückenverschluß (55) im Bereich der Überstände (64) Ausnehmungen (67) aufweist, in die die Überstände (64) eingepaßt sind, so daß nach außen gerichtete Oberflächen von Pollückenverschluß (55), Polen (28) und Gegenpolen (34) eine im wesentlichen zylindrische Oberfläche des Rotors (10) ergeben.

3. Elektrische Maschine nach Anspruch 2, **dadurch gekennzeichnet, daß** die Überstände (64) durch einen Umformprozeß der Polräder (13, 16) gefertigt sind.

4. Elektrische Maschine nach einem der vorhergehenden Ansprüche, **dadurch gekennzeichnet, daß** zwischen zumindest einem Endbereich des Pollückenverschlusses (55) und zumindest einer Kehle (79) zwischen zwei Polwurzeln (31; 37) eine Öffung zu einen Raum radial innerhalb der Pole (28) und Gegenpole (34) ausgespart ist.

5. Elektrische Maschine nach einem der vorhergehenden Ansprüche, **dadurch gekennzeichnet, daß** ein Übergang zwischen den Oberflächen des Pollückenverschlusses (55) und den Polen (28) und Gegenpolen (34) stufenlos erfolgt.

6. Elektrische Maschine nach einem der vorhergehenden Ansprüche, **dadurch gekennzeichnet, daß** der Pollückenverschluß (55) stabförmige Bereiche (70) aufweist, die durch einen Ring (37) miteinander verbunden sind.

7. Elektrische Maschine nach Anspruch 6, **dadurch gekennzeichnet, daß** zumindest ein Endbereich (61) mit dem Ring (73) durch ein Flächenelement (76) verbunden ist.

8. Elektrische Maschine nach Anspruch 7, **dadurch gekennzeichnet, daß** zumindest ein Flächenelement (76) sich an einer nach radial innen gerichteten Unterseite eines Pols (28) oder Gegenpols (34) abstützt.

## Claims

1. Electrical machine having a rotor (10), in particular a claw-pole rotor, having an exciter system comprising electrically excited individual poles in the rotor (10) in the form of electromagnetically excited poles (28) and opposing poles (34), having a pole gap closure (55), which is inserted between the poles (28) and the opposing poles (34), which alternate around the circumference of the rotor (10), and at least partially fills the free spaces, **characterized in that** the pole gap closure (55) is supported with at least one of its axial end regions beneath projections (64) on pole roots (31, 37).

2. Electrical machine according to Claim 1, **characterized in that** the pole gap closure (55) has, in the region of the projections (64), cutouts (67), into which the projections (64) are fitted, with the result that outwardly pointing surfaces of the pole gap closure (55), poles (28) and opposing poles (34) provide a substantially cylindrical surface of the rotor (10).

3. Electrical machine according to Claim 2, **characterized in that** the projections (64) are manufactured by a deformation process of the magnet wheels (13, 16).

4. Electrical machine according to one of the preceding claims, **characterized in that** an opening to a space radially within the poles (28) and opposing poles (34) is cut out between at least one end region of the pole gap closure (55) and at least one wedge (79) between two pole roots (31; 37).

5. Electrical machine according to one of the preceding claims, **characterized in that** there is a stepless transition between the surfaces of the pole gap closure (55) and the poles (28) and opposing poles (34).

6. Electrical machine according to one of the preceding claims, **characterized in that** the pole gap closure (55) has rod-shaped regions (70), which are connected to one another by a ring (37).

7. Electrical machine according to Claim 6, **characterized in that** at least one end region (61) is connected to the ring (73) by a surface element (76).

8. Electrical machine according to Claim 7, **characterized in that** at least one surface element (76) is supported on an underside, which points radially inwards, of a pole (28) or opposing pole (34).

## Revendications

1. Machine électrique comportant un rotor (10) notamment un rotor à griffes polaires, un système d'excitation formé de pôles séparés excités électriquement dans le rotor (10) sous la forme de pôles à excitation électromagnétique (28) et de pôles antagonistes (34) avec un moyen de fermeture de l'intervalle polaire (55) entre les pôles (28) et contre-pôles (34) alternant à la périphérie du rotor (10), ce moyen de fermeture remplissant au moins en partie les espaces libres,
**caractérisée en ce que**
le moyen de fermeture des intervalles des pôles (55) s'appuie au moins par l'une des ses zones d'extrémité axiale avec des intervalles (64) contre la base des pôles (31, 37).

2. Machine électrique selon la revendication 1,
**caractérisée en ce que**
le moyen de fermeture de l'intervalle entre les pôles (55) présente des cavités (67) au niveau des parties en relief (64) et dans lesquelles viennent les parties en relief (64) de façon que lorsque les surfaces de la fermeture polaire (55) sont dirigées vers l'extérieur, les pôles (28) et les contre-pôles (34) se situent dans la surface supérieure essentiellement cylindrique du rotor (10).

3. Machine électrique selon la revendication 2,
**caractérisée en ce que**
les parties en relief (64) sont fabriquées par un procédé de transformation des roues polaires (13, 16).

4. Machine électrique selon l'une des revendications précédentes,
**caractérisée en ce qu'**
entre au moins une zone d'extrémité du moyen de fermeture des intervalles polaires (55) et au moins une gorge (79) entre deux bases de pôles (31, 37) on a dégagé une ouverture vers un espace situé radialement à l'intérieur des pôles (28) et des contre-pôles (34).

5. Machine électrique selon l'une quelconque des revendications précédentes,
**caractérisée en ce que**
le passage entre les surfaces supérieures du moyen de fermeture des intervalles polaires (55) et des pôles et contre-pôles (34) se fait de façon continue.

6. Machine électrique selon l'une des revendications précédentes,
**caractérisée en ce que**
le moyen de fermeture des intervalles polaires (55) comprend des zones (70) en forme de tige reliées par un anneau (37).

7. Machine électrique selon la revendication 6,
**caractérisée en ce qu'**
au moins une zone d'extrémité (61) est reliée à l'anneau (73) par un élément de surface (76).

8. Machine électrique selon la revendication 7,
**caractérisée en ce qu'**
au moins un élément de surface (76) s'appuie contre la face inférieure d'un pôle (28) ou d'un contre-pôle (34) dirigée radialement vers l'intérieur.
